# EUROPEAN PATENT SPECIFICATION

(11) **EP 0 702 700 B1**
(45) Date of publication and mention of the grant of the patent: **07.11.2001**
(21) Application number: 93918651.6
(22) Date of filing: 05.08.1993
(51) Int. Cl.: C08F 4/64, C08F 4/02, C08F 10/00

(54) **SUPPORTED IONIC TRANSITION METAL CATALYSTS FOR OLEFIN POLYMERIZATION**
IONISCHE ÜBERGANGSMETALLKATALYSATOREREN AUF TRÄGER FÜR OLEFINPOLYMERISATION
CATALYSEURS IONIQUES A SUPPORT A BASE DE METAL TRANSITOIRE POUR LA POLYMERISATION DES OLEFINES

(30) Priority: 05.08.1992 US 926006
(43) Date of publication of application: 27.03.1996
(60) Divisional application: 00127961.1
(73) Proprietor: ExxonMobil Chemical Patents Inc., Baytown, TX 77520-5200 (US)
(72) Inventor: UPTON, David, Jonathan, Deer Park, TX 77536 (US); CANICH, Jo, Ann, Marie, Houston, TX 77058 (US); HLATKY, Gregory, George, Houston, TX 77062 (US); TURNER, Howard, William, Houston, TX 77059 (US)
(74) Representative: Dew, Melvyn John
(86) International application number: US9307352
(87) International publication number: WO9403506

(56) References cited:
- EP-A- 0 406 912
- EP-A- 0 522 581
- WO-A-91/09882

## Description

### Background of the Invention

### 1. Field of the Invention

The invention relates to supported ion-exchange catalysts useful for polymerization of olefins, diolefins, cyclic olefins and acetylenically unsaturated monomers.

### 2. Background

European Patent Application 277,003, 277,004 and PCT International Application WO 92/00333 describe an advance in Group 4 transition metal catalysts; a new catalyst which does not require either an alkyl aluminum or alumoxane as an activator. The Group 4 transition metal catalyst is prepared as a reaction product of a transition metal compound and an ionic activator compound. The ionic activator comprises a cation which will irreversibly react with at least one ligand contained in Group 4 metal compound and a labile, bulky (approximately 4 angstroms or larger) anion which is a single coordination complex having a plurality of lipophilic radicals covalently coordinated to and shielding a central charge-bearing metal or metalloid atom, the bulk of said anion being such that upon reaction, the activator is sterically hindered from covalently coordinating to the metal cation. Hence an active catalytic species of a transition metal is formed, namely an ionic pair comprising a transition metal cation paired with the noncoordinating anion of the activator component.

The new transition metal catalyst system (hereafter referred to as an "ionic catalyst") eliminates the need for an expensive alumoxane activator. The ionic catalyst also offers other advantages over the alumoxane activated catalysts such as: (1) high weight average molecular weight; (2) high catalytic activity; (3) good incorporation of comonomers; and (4) the control of the chain end chemistry of the polymer.

Homogeneous ionic catalyst generally cannot be practically used for gas phase polymerization. The use of a supported catalyst offers the possibility of gas phase compatibility. Control of the particle size distribution of the polymeric product in the various polymerization processes eliminates or reduces the extent of reactor fouling.

Supported catalyst for olefin polymerization are well known in the art. These catalysts offer, among others, the advantages of being usable in gas or slurry phase reactors, allowing the control of polymer particle size and thereby the control of product bulk density. Gas phase reactors also eliminate the need for a solvent and the equipment for solvent handling the separation. However, the known Ziegler-Natta olefin polymerization supported catalysts also present disadvantages which include broad MWD and broad CD, inefficient incorporation of comonomers, poor sequence distribution and, in the case of lower activity catalysts, the need for a product deashing step.

Supported transition metal-alumoxane catalysts such as described in U.S. Patent 4,897,455 of Welborn and U.S. Patent 5,086,025 of Chang and US 5,057,475 of Canich describe catalysts obtained by reacting a transition metal and an alumoxane in the presence of the solid support material. The catalysts are prepared either by reaction of a thermally dehydrated support with alumoxane solution or by the reaction of a hydrated silica gel with an alkylaluminum to generate surface-supported alumoxanes in situ. The supported catalyst may then be employed either as the sole catalyst component or in combination with an organometallic cocatalyst. The supported transition metal-alumoxane catalyst generally produce polymers of lower molecular weight and comonomer incorporation than their unsupported counterpart.

It is known that ionic catalysts are deactivated by Lewis bases. Hence it is a practice not to support ionic catalysts on support materials such as silica.

Supported ionic catalysts containing bis-cyclopentadienyl ("bis-Cp") moieties are described in PCT WO 91/09882. These bis-Cp catalysts provide a supported ionic catalyst for gas or slurry phase olefin polymerization. They are capable of providing a polymer product having a high molecular weight, narrow MWD and CD, good comonomer incorporation, good sequence distribution, uniform particles of high bulk density and controlled particle size *for* ease of removal from the reactor.

WO 93/19103, relevant under Article 54(3) EPC, only discloses polymerization of poly-alpha-olefins of controlled tacticity and does not disclose homopolymerization of ethylene and copolymerization of ethylene with olefins having from 3 to 10 carbon atoms to form a non-tactic polymer.

EP-A-522581, relevant under Article 54(3) EPC, does not disclose an ionic catalyst of the general formula now claimed, and in particular, the selection of the combination of Cp cyclopentadienyl ligand; a heteroatom ligand J and a hydride or hydrocarbyl group X.

EP-A-418044 does not disclose the particular form of the support material which has undergone a preceding dehydration.

It would be desirable to provide a supported ionic catalyst capable of not only producing polymers with the above properties, but also include polymers of low density, with optional high molecular weight. Additionally, it would be desirable to produce a catalyst with low hydrogen sensitivity so as to allow use of hydrogen to control molecular weight in, for example, a gas phase polymerization reactor.

### SUMMARY OF THE INVENTION

The invention provides a process to produce polyolefins comprising contacting ethylene or ethylene with olefins having from 3 to 10 carbon atoms under polymerization conditions in the presence of the catalyst obtained by a method comprising the steps of:
(a) combining,
   (i) at least one transition metal component and
   (ii) an activator component, said at least one transition metal component comprising a monocyclopentadienyl metal compound including a metal selected from Group 4 transition metals, the activator component comprising a cation which will irreversibly react with at least one ligand in said transition metal component and an anion, said anion being a chemically stable non-nucleophilic anionic complex to provide an ionic catalyst of the general formulae: 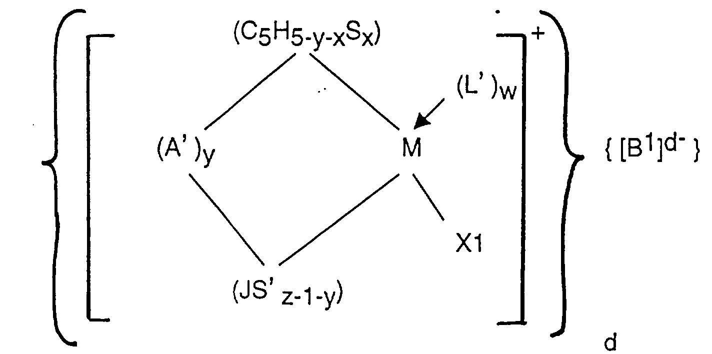 wherein:
      A' is a bridging group;
      (C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
      x is from 0 to 5 denoting the degree of substitution;
      M is Group 4 transition metal;
      L' is a neutral Lewis base;
      X₁ is a hydride radical, hydrocarbyl radical, substituted-hydrocarbyl radical, hydrocarbyl-substituted organometalloid radical or halocarbyl-substituted organometalloid radical, which radical may optionally be covalently bonded to both or either M and L' or all and any M, S, and S' and X₁ is not a Cp ring as defined above;
      (JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; and z is the coordination number of the element J;
      y is 0 or 1;
      w is an integer from 0 to 1;
      B' is the chemically stable, non-nucleophilic anionic complex having a molecular diameter about or greater than 4 angstroms; and
      d is an integer representing the charge of B';
   (iii) a catalyst support material selected from alumina, silica, alumina-silica, talc, magnesia, zirconia, titania, finely divided polyolefins or mixtures thereof, preferably alumina, silica, or mixtures thereof, which catalyst support has been previously dehydrated; and
(b) optionally prepolymerizing said supported catalyst system with an olefinic monomer.

The invention provides a method for preparing supported ionic catalysts which are suitable for use in the polymerization of olefins, diolefins, cyclic olefins and acetylenically unsaturated monomers. The heterogeneous catalyst permit the production of polyolefins of high weight average molecular weight (> 1 million) and narrow MWD at high catalytic activity rates. Moreover, the polyolefin products of the supported catalyst have a narrow CD and improved sequence distribution of comonomers as compared to the products made employing prior art conventional supported Ziegler-Natta catalysts.

The ability to produce a supported ionic catalyst was surprising since it would have been predicted that the reaction of ionic catalyst such as described in EPA 277003 and EPA 277004, with a Lewis base such as is present on a metal oxide surface would result in catalyst deactivation. It was believed that such supports would: 1) decrease catalyst activity due to the residual hydroxyl groups on the surface; 2) bind too strongly to the catalyst through the surface oxide groups; and 3) alter the polymer characteristics.

The supported ionic transition metal catalyst of this invention preferably comprises an ionic transition metal catalyst and a suitable support material. The transition metal component of the ionic catalysts may be selected from a cyclopentadienyl (Cp) derivative of a Group 4 (new IUPAC nomenclature based on Periodic Table of Elements as described in Chemical and Engineering News, 63(5) 27, 1985) metal compound containing at least one ligand which will combine with an activator component or at least a portion thereof such as a cation portion thereof. The activator component is an ionic compound comprising a cation which will irreversibly react with at least one ligand contained in said Group 4 metal compound (transition metal component) and an anion which is a chemically stable, non-nucleophilic anionic complex. These can be single coordination complexes comprising a plurality of lipophilic radicals covalently coordinated to and shielding a central formally charge-bearing metal or metalloid atom or an anion which comprises a plurality of boron atoms such as polyhedral boranes, carboranes, and metallacarboranes. The anions are bulky, typically 4 angstroms or greater, labile and stable to any reaction involving the cation of the activator component. The anion may be any suitably substituted anion which is not hydrolyzed by aqueous solutions. Upon combination of the transition metal component, there is generated an ion pair consisting of a Group 4 metal cation with a formal coordination number of 3 or 4 and a valence of +4 and the aforementioned anion, which anion is compatible with and noncoordinating toward the metal cation formed from the transition metal component. The anion of the activator compound must be capable of stabilizing the metal cation complex without interfering with the ability of the metal cation or its decomposition product to function as a catalyst and must be sufficiently labile to permit displacement by an olefin, diolefin, cyclic olefin, or an acetylenically unsaturated monomer during polymerization. Likewise if 4 coordination sites of the metal cation are occupied, one must be a ligand sufficiently labile to permit displacement by an olefin, diolefin, cyclic olefin or an acetylenically unsaturated mononer.

Independently or together, the transition metal component and the activator are contacted with a dried inorganic or organic solid support material, which preferably has been treated with an aluminum alkyl solution before such contact, to form the supported ionic catalyst which is not deactivated by the Lewis base portions of the supported material. An ionic catalyst of enhanced productivity results when a suitable aluminum alkyl is employed as an additive during polymerization of the olefinic monomer(s). Greater particle size control can also be achieved by prepolymerizing the supported catalyst with olefinic monomer prior to use.

The method for preparing these supported ionic catalyst may comprise the steps of,
(a) combining, in a solvent or diluent
   (i) at least one transition metal component comprising a η⁵-bonded (η=eta) cyclopentadienyl transition metal compound (mono-Cp compound) said metal compound being a Group 4 metals,
   (ii) at least one activator component comprising a cation which will irreversibly react with at least one ligand contained in the Group 4 metal compound and an anion, said anion being a chemically stable, non-nucleophilic anionic complex having a molecular diameter about or greater than 4 angstroms, which may be a single coordination complex comprising a plurality of lipophilic radicals covalently coordinated to and shielding a central charge-bearing metal or metalloid atom or comprise a plurality of boron atoms, said anion being bulky, labile and capable of stabilizing the metal cation formed as a result of reaction between the two, and
   (iii) a catalyst support material which preferably has been dehydrated and treated with a hydrocarbon solution of a hydrolyzable organoadditive, preferably a Group 13 alkyl compound, isolated, washed, and suspended in a suitable solvent,
(b) forming a supported catalyst product as a free-flowing solid or slurry.

The supported catalyst of this invention will polymerize ethylene, α-olefins, diolefins, strained cyclic olefins and/or acetylenically unsaturated monomers either alone or in combination with other olefins and/or other unsaturated monomers in liquid, slurry or gas phase reaction.

Optionally, the activator of step (ii) described above may be placed on a support material which has been treated as described and isolated as a supported activator component. The supported activator component may later be contacted with a transition metal component to form an active catalyst system.

### Detailed Description of the Preferred Embodiments

The present invention relates to supported mono-Cp catalysts eminently suited for use in various polymerization processes including gas or slurry phase polymerization of olefins. The catalysts preferably include a compound of the Group 4 transition metals, an ionic activator compound and a catalyst support. European Patent Applications EP 277,003, 277,004, PCT International Application WO 92/00333 describe the homogeneous variants of the Group 4 ionic catalysts which are prepared as the reaction product of a Group 4 metal compound and an ionic activator compound.

PCT WO 91/09882 describes supported bis-Cp transition metal components activated to catalysts with ionic activators. The present invention differs from that described in WO 91/09882 in that it provides a catalyst capable of producing polymer with low density and optional high molecular weight low density is achieved by the greater ability of these catalyst to incorporate propene and higher alpha-olefins. Because of this ability, larger alpha-olefins than typically used in the gas phase process can be used since the alpha-olefin vapor pressure can be sufficient to yield polymers with relatively low densities. High molecular weight can be obtained dues to the low rate of chain transfer even in the presence of alpha-olefins. In addition, the ionically activated mono-Cp catalyst has low hydrogen sensitivity and therefore allows one to use hydrogen to control molecular weight of polymers formed in a continous or batch gas phase reactor.

This invention also differs from PCT WO 91/09882 in that the mono-Cp moieties allow for more pronounced comononer incorporation and molecular weights in the polymer formed, Since mono-Cp moieties are more open, i.e., less sterically constrained, than bis-Cp compounds, one would expect the mono-Cp compounds to be more easily deactivated by polar units on the support surface than the bis-Cp compounds. Surprisingly, it has been discovered that mono-Cp compounds can be placed on a support with an ionic activator and maintain catalytic abilities.

### Ionic Catalyst System - General Description

The ionic catalysts used in this invention can be represented by the following general formulae: 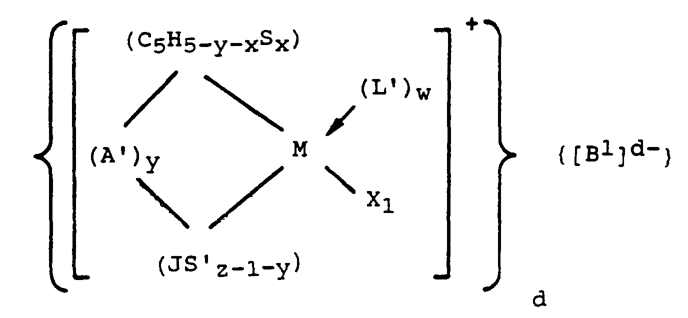 wherein:
A' is a bridging group containing a Group 14 element;
(C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is a Group 4 transition metal;
L' is a neutral Lewis base;
X₁ is a hydride radical, hydrocarbyl radical, substituted-hydrocarbyl radical, hydrocarbyl-substituted organometalloid radical or halocarbyl-substituted organometalloid radical which radical may optionally be covalently bonded to both or either M and L' or all and any M, S, and S' and X₁ is not a Cp ring as defined above;
(JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; and z is the coordination number of the element J;
y is 0 or 1;
w is an integer from 0 to 1;
B' is a chemically stable, non-nucleophilic anionic complex having a molecular diameter about or greater than 4 angstroms; and
d is an integer representing the charge of B'.

The improved catalysts are preferably prepared by combining at least two components. The first component is a Cp derivative of a Group 4 metal compound containing at least one ligand which will combine with the second component or at least a portion thereof such as a cation portion thereof. The second component is an ion-exchange compound comprising a cation which will irreversibly react with at least one ligand contained in said metal compound (first component) and a non-coordinating anion which is either a single coordination complex comprising a plurality of lipophilic radicals covalently coordinated to and shielding a central formally charge-bearing metal or metalloid atom or an anion comprising a plurality of boron atoms such as polyhedral boranes, carboranes and metallacarboranes.

The cation portion of the second component may comprise Bronsted acids such as protons, or protonated Lewis bases, or may comprise reducible Lewis acids such as ferricinum, tropylium, triphenylcarbenium or silver cations.

In general, suitable anions for the second component may be any stable and bulky anionic complex having the following molecular attributes: 1) the anion should have a molecular diameter greater than 4 angstroms; 2) the anion should form stable ammonium salts; 3) the negative charge on the anion should be delocalized over the framework of the anion or be localized within the core of the anion; 4) the anion should be a relatively poor nucleophile; and 5) the anion should not be a powerful reducing or oxidizing agent. Anions meeting these criteria - such as polynuclear boranes, carboranes, metallacarboranes, polyoxoanions and anionic coordination complexes are well described in the literature. Upon combination of the first and second components, the cation of the second component reacts with one of the ligands of the first component, thereby generating an ion pair consisting of a metal cation and the aforementioned anion, which anion is compatible with and noncoordinating towards the metal cation and the aforementioned anion, which anion is compatible with and noncoordinating towards the metal cation formed from the first component. The anion of the second component must be capable of stabilizing the metal cation without interfering with the metal cation's ability to function as a catalyst and must be sufficiently labile to permit displacement by an olefin, diolefin, cyclic olefin, or an acetylenically unsaturated monomer during polymerization.

### A. The Transition Metal Component

The Group 4 metal compounds, useful as first components in the preparation of the improved catalyst of this invention are η⁵-cyclopentadienyl transition metal compounds of Group 4 transition metals. In general, useful transition metal may be represented by the following general formulae: 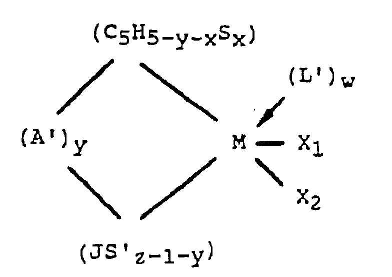 wherein;
L' is a neutral Lewis base;
X₁ or X₂ is, independently, hydride radicals, hydrocarbyl radicals, substituted hydrocarbyl radicals, halocarbyl radicals, substituted halocarbyl radicals, and hydrocarbyl- and halocarbyl-substituted organometalloid radicals or X₁ may optionally be covalently bonded to M and L' or all and any M, S, and S'; or two X'₁ are joined and bound to the metal atom to form a metallacycle ring containing from 3 to 20 carbon atoms provided that X₁ is not a Cp ring as previously defined.

Examples of bridging groups A' include but are not limited to R₂C, R₂Si, R₂Ge, R₂CR₂C, R₂SiR₂Si, R₂GeR₂Ge, R₂CR₂Si, R₂CR₂Ge R₂CR₂CR₂C, R₂SiOR₂Si diradicals where R is independently selected from the group containing hydride, halogen radicals, and C₁₋₂₀ hydrocarbyl radicals. Preferably, A' has a bridge length of two atoms or less as in methylene, ethylene, diphenylsilyl, dimethylsilyl, methylphenylsilyl.

Examples of substituent groups S include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, naphthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluoromethyl, perfluoroethyl, perfluoropropyl, perfluorobutyl, perfluorophenyl, chlorodifluoromethyl, chlorotetrafluorophenyl, bromotetrafluorophenyl, iodotetrafluorophenyl; C₁₋₂₀ substituted-halocarbyl radicals such as methyltetrafluorophenyl, N,N-dimethylaminodifluoromethyl, methoxyperflouroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl; C₁₋₂₀ hydrocarbyl-substituted boron radicals including dimethylboranyl, diphenylboranyl; C₁₋₂₀ hydrocarbyl-substituted pnictogen radicals including N,N-dimethylamino, diphenylamino, diphenylphosphino, dimethylphosphino; C₁₋₂₀ hydrocarbyl-substituted chalcogen radicals including methoay, ethoxy, butoxy, phenoxy, methylthio, ethylthio, phenylthio, and halogen radicals including fluoro, chloro, bromo, and iodo.

Examples of neutral Lewis base ligands (L') include but are not limited to diethylether, dimethylether, N,N-dimethylaniline, trimethylamine, triphenylamine, triethylamine, triphenylphosphine, trimethylphosphine, thiophene, dimethylsulfide, benzyne, ethylene, propylene, butene, 1,4-hexadiene, acetylene.

X₁ is independently a univalent anionic ligand including but not limited to hydride, C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclodocecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, butylphenyl, butyldimethylphenyl; C₁₋₂₀ substituted hydrocarbyl radicals including benzyl, N,N-dimethylaminobenzyl, N,N-dimethylaminomethyl, methoxyhexyl, diphenylphosphinodecyl, fluorophenyl, trifluoromethylphenyl, fluoromethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl. Optionally two X₁ may form a metallocycle with the metal such as methylidene, ethylidene or propylidene. In all cases, X₁ (or both X₁ together) is not a Cp ring as defined by (C₅H_{5-y-x}Sₓ).

Examples of S' include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, napthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluormethyl, perfluoroethyl, perfluoropropyl, perfluorobutyl, perfluorophenyl, chlorodifluoromethyl, chlorotetrafluorophenyl, bromotetrafluorophenyl, iodotetrafluorophenyl; C₁₋₂₀ substituted-halocarbyl radicals such as methyltetrafluorophenyl, N,N-dimethylaminodifluoromethyl, methoxyperflouoroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl.

Table 1 depicts representative constituent moieties for the transition metal component. Examples 1 and 2 demonstrate polymerization of ethylene monomers employing a mono-Cp ionic catalyst system.

### B. The Activator Component

Compounds useful as an activator component in the preparation of the ionic catalyst systems used in the process of this invention comprise a cation, which may be a Bronsted acid capable of donating a proton, and a compatible non-coordinating anion which anion is relatively large (bulky), capable of stabilizing the active catalyst species (the Group 4, 5 or 6 cation) which is formed when the two compounds are combined and said anion will be sufficiently labile to be displaced by olefinic, diolefinic, and acetylenically unsaturated substrates or other neutral Lewis bases such as ethers, nitriles and the like. Two classes of compatible non-coordinating anions have been disclosed in EPA 277003 and EPA 277004: 1) anionic coordination complexes comprising a plurality of lipophilic radicals covalently coordinated to and shielding a central charge-bearing metal or metalloid core, and 2) anions comprising a plurality of boron atoms such as carboranes, metallacarboranes and boranes.

In general, the activator compounds containing single anionic coordination complexes which are useful in this invention may be represented by the following general formula:

[(L'-H)+]^{c}[(M')^{m+}Q₁Q₂...Qₙ]^{d-}

wherein:
H is a hydrogen atom;
[L'-H] is a Bronsted acid;
M' is a metal or metalloid;
Q₁ to Qₙ are, independently, hydride radicals, bridged or unbridged dialkylamido radicals, alkoxide and aryloxide radicals, substituted-hydrocarbyl radicals, halocarbyl and substituted-halocarbyl radicals and hydrocarbyl- and halocarbyl-substituted organometalloid radicals and any one, but not more than one, Q₁ to Qₙ may be a halide radical;
m is an integer representing the formal valence charge of M'; and
n is the total number of Q ligands.

As indicated above, any metal or metalloid capable of forming an anionic complex which is stable in water may be used or contained in the anion of the second compound. Suitable metals, then, include, but are not limited to, aluminum, gold and platinum. Suitable metalloids include, but are not limited to, boron, phosphorus and silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

The preferred activator compounds comprising boron may be represented by the following general formula:

[L'-H]+[BAr₁Ar₂X₃X₄]-

wherein:
B is boron in a valence state of 3;
Ar₁ and Ar₂ are the same or different substituted-aromatic hydrocarbon radicals containing from 6 to 20 carbon atoms and may be linked to each other through a stable bridging group; and
X₃ and X₄ are, independently, hydride radicals, hydrocarbyl and substituted-hydrocarbyl radicals, hydrocarbyl- and halocarhyl-substituted organometalloid radicals, disubstituted pnictogen radicals, substituted chalcogen radicals and halide radicals, with the proviso that X₃ and X₄ will not be halide at the same time.

In general, Ar₁ and Ar₂ may, independently, be any substituted-aromatic hydrocarbyl radical. Suitable aromatic radicals include, but are not limited to, naphthyl and anthracenyl radicals. Suitable substituents on the substituted-aromatic hydrocarbyl radicals, include, but are not necessarily limited to, hydrocarbyl radicals, organometalloid radicals, alkoxy and aryloxy radicals, alkylamido radicals, fluorocarbyl and fluorohydrocarbyl radicals and the like such as those useful as X₃ and X₄. The substituent may be ortho, meta or para, relative to the carbon atoms bonded to the boron atom. When either or both X₃ and X₄ are a hydrocarbyl radicals, each may be the same or a different substituted-aromatic radical as are Ar₁ and Ar₂, or the same may be a straight or branched alkyl, alkenyl or alkynyl radical, a cyclic hydrocarbon radical or an alkyl-substituted cyclic hydrocarbon radical. X₃ and X₄ may also, independently be alkoxy or dialkylamido radicals wherein the alkyl portion of said alkoxy and dialkylamido radicals are hydrocarbyl radicals, organometalloid radicals and the like. As indicated above, Ar₁ and Ar₂ could be linked to either X₃ or X₄. Finally, X₃ and X₄ may also be linked to each other through a suitable bridging group.

Examples of boron compounds which may be used as an activator component in the preparation of the improved catalysts of this invention are trialkyl-substituted ammonium salts such as trimethylammonium tetra(p-tolyl)boron, trimethylammonium tetra(o-tolyl)boron, tributylammonium tetrakis(pentafluorophenyl)borate, tripropylammonium tetra(o,p-dimethylphenyl)boron, tributylammonium tetra(m,m-dimethylphenyl)boron, tributylammoniumtetra(p-tri-fluoromethylphenyl)boron, tri(n-butyl)ammonium tetra(o-tolyl)boron: dialkyl ammonium salts such as di(i-propyl)ammonium tetrakis(pentafluorophenyl)borate.

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations.

The most preferred activator compounds comprising boron may be represented by the following general formula:

[L'-H]⁺[B(C₆F₅)₃Q]⁻

wherein:
F is fluorine, C is carbon and B is boron, L' and Q are as defined above. Illustrative but not limited, examples of most preferred activator compounds comprising boron which may be used in the preparation of the improved catalysts of this invention include N,N-dialkylanilinium salts (L' = N,N-dialkylaniline) where Q is a simple hydrocarbyl such as methyl, butyl, cyclohexyl, or substituted phenyl or where Q is a polymeric hydrocarbyl of indefinite chain length such as polystyrene, polyisoprene, or polyparamethylstyrene. Polymeric Q substituents on the most preferred anion offer the advantage of providing a highly soluble ion-exchange activator component and final ionic catalyst. Soluble catalysts and/or precursors are often preferred over insoluble waxes, oils, phases, or solids because they can be diluted to a desired concentration and can be transferred easily using simple equipment in commercial processes.

Activator components based on anions which contain a plurality of boron atoms may be represented by the following general formulae:

[L'-H]^{c}[(CX)ₐ(BX')ₘX''_{b}]^{c-} or

[L'-H]^{d'}[[[(CX₆)_{a'}(BX₇)_{m'}(X₈)_{b}']^{c'}-]2M"^{n'}+]_{d'-}

wherein:
[L'H] is either H+ or a Bronsted acid derived from the protonation of a neutral Lewis base;
X, X', X", X₆, X₇ and X₈ are, independently, hydride radicals, halide radicals, hydrocarbyl radicals, subsituted-hydrocarbyl radicals, hydrocarbyl- or halocarbyl- substituted organometalloid radicals;
M" is a transition metal;
a and b are integers ≥ 0; c is an integer ≥ 1; a + b + c = an even-numbered integer from 2 to 8; and m is an integer ranging from 5 to 22;
a' and b' are the same or different integer ≥ 0; c' is an integer ≥ 2; a' + b' + c' = an even-numbered integer from 4 to 8; m' is an integer from 6 to 12; n' is an integer such that 2c' - n' = d'; and d' is an integer ≥ 1.

Preferred anions of this invention comprising a plurality of boron atoms comprise:
(1) A trisubstituted ammonium salt of a borane or carborane anion satisfying the general formula:

   [(CH)ₐₓ(BH)_{bx}]^{cx-}

   wherein:
   ax is either 0 or 1; cx is either 1 or 2; ax + cx = 2; and bx is an integer ranging from 10 to 12;
(2) A trisubstituted ammonium salt of a borane or carborane or a neutral borane or carborane compound satisfying the general formula:

   [(CH)_{ay}(BH)_{my}(H)_{by}]^{cy-}

   wherein:
   ay is an integer from 0 to 2; by is an integer from 0 to 3; cy is an integer from 0 to 3; ay + by + cy = 4; and my is an integer from 9 to 18; or
(3) A trisubstituted ammonium salt of a metallaborane or metallacarborane anion satisfying the following general formula:

   [[[(CH)_{az}(BH)_{mz}(H)_{bz}]^{cz-}]₂M"^{nz+}]^{dz-}

   wherein:
   az is an integer from 0 to 2; bz is an integer from 0 to 2; cz is either 2 or 3; mz is an integer from 9 to 11; az + bz + cz = 4; and nz and dz are respectively, 2 and 2 or 3 and 1.

Illustrativc, but not limited, examples of second components which can be *used* in preparing catalyst systems utilized in the process of this invention wherein the anion of the second component contains a plurality of boron atoms are mono-, di-, trialkylammonium and phosphonium and dialkylary]arylammonium and -phosphonium salts such as bis[tri(n-butyl)ammonium]dodecaborate, bis[tri(n-butyl)ammonium]decachlorodecaborate,tri(n-butyl)ammonium dodecachlorododecaborate, tri(n-butyl)ammonium 1-carbadecaborate, tri(n-butyl)ammonium 1-carbaundecaborate, tri(n-butyl)ammonium carbadecaborate, tri(n-butyl)ammonium dibromo-1-carbadodecaborate; borane and carborane complexes and salts of borane and carborane anions such as decaborane (14), 7,8-dicarbaundecaborane (13), 2,7-dicarbaundecaborane (13), undecahydrideo-7,8-dimethyl-7,8-dicarbaundecaborane, tri(n-butyl)ammonium 6-carbadecaborate (12), tri(n-butyl)ammonium 7-carbaundecaborate, tri(n-butyl)ammonium 7,8-dicarbaundecaborate and metallaborane anions such as tri(n-butyl)ammonium bis(nonahydride-1,3-dicarbanonaborato) cobaltate (III), tri(n-butyl)ammonium bis(undccahydride-7,8-dicarbaundecaborato) ferrate (III), tri(n-butyl)ammonium bis(undecahydride-7,8-dicarbaundecaborato) cobaltate (III), tri(n-butyl)ammonium bis(undecahydride-7,8-dicarbaundecaborato)nickelate (III), tri(n-butyl)ammonium bis(nonahydride-7,8-dimethyl-7,8-dicarbaundecaborato)ferrate (III), tri(n-butyl)ammonium bis(tribromooctahydride-7,8-dicarbaundecaborato)cobaltate (III), tri(n-butyl)ammonium bis(undecahydridodicarbadodecaborato) cobaltate (III) and bis[tri(n-butyl)ammonium] bis(undecahydride-7-carbaundecaborato)cobaltate (III). A similar list of representative phosphonium compounds can be recited as illustrative second compounds, but for the sake of brevity, it is simply noted that the phosphonium and substituted-phosphonium salts corresponding to the listed ammonium and substituted-ammonium salts could be used as second compounds in the present invention.

### A. Choice of Transition Metal-Activator Pairs

In general, while most transition metal components identified above may be combined with most activator components identifed above to produce an active olefin polymerization catalyst, it is desirable for continuity of the polymerization operations that either the metal cation initially formed form the transition metal component or a decomposition product thereof be a relatively stable catalyst. It is also desirable that the anion of the activator compound be stable to hydrolysis when an ammonium salt is used. Further, it is desirable that the acidity of the activator component be sufficient, relative to the transition metal component to facilitate the needed proton transfer. In general, Cp metal compounds which can be hydrolyzed by aqueous solutions are considered suitable as components to form the catalysts described herein.

With respect to the combination of the transition metal component with the activator component to form a catalyst of this invention, it should be noted that the two compounds combined for prepartion of the active catalyst must be selected to avoid transfer of a fragment of the anion, particularly an aryl group, to the metal cation, thereby forming a catalytically inactive species. This can be done by steric hindrance, resulting from substitutions on the Cp carbon atoms as well as substitutions on the aromatic carbon atoms of the anion. It is followed, then, that the transition metal components comprising perhydrocarbyl-substituted Cp radicals could be effectively used with a broader range of activator compounds than could transition metal components comprising unsubstituted Cp radicals. As the amount and size of the substitutions on the Cp radicals are reduced however, more effective catalysts are obtained with activator compounds containing anions which are more resistant to degradation, such as those with substituents on the ortho positions of the phenyl rings. Another means of rendering the anion more resistant to degradation is afforded by fluorine substitution, especially perfluorosubstitution, in the anion. Fluoro-substituted stabilizing anions may, then, be used with broader range of metal compound (first components). Activators in which the anions comprise pentafluorophenyl groups are preferred for preparing ion-pair transition metal catalysts of this invention. It is preferred that the mole ratio of transition metal component to activator component be 1:1 or greater,

While generally an activator will be combined with a transition metal compound and be placed on a support, it is possible to place the activator, alone, on a support media. A transition metal compound may be combined with the supported activator at a later point when the catalyst system is to be employed.

### The Catalyst Support

Typically, the support can be any of the known solid catalyst supports, particularly porous supports, such as talc, inorganic oxides, and resinous support materials such as polyolefins. Preferably, the support material is an inorganic oxide in particulate form.

Suitable inorganic oxide materials which are desirably employed in accordance with this invention include Group 2, 3, 4, 13, or 14 metal oxides. The most preferred catalyst support materials include silica, alumina, and silica-alumina, and mixtures thereof. Other inorganic oxides that may be employed either alone or in combination with the silica, alumina or silica-alumina are magnesia, titania, zirconia. Other suitable support materials, however, can be employed, for example, finely divided polyolefins such as finely divided polyethylene.

The specific particle size, surface area and pore volume of the inorganic oxide determine the amount of oxide that is desirable to employ in preparing the catalyst compositions, as well as affecting the properties of the polymer formed. These properties must frequently be taken into consideration in choosing an inorganic oxide for use in a particular aspect of the invention. In general, optimum results are usually obtained by the use of inorganic oxides having an average particle size in the range of 0.1 to 600 microns (1 micron = 1 micrometer) preferably 0.3 to 80 microns; a surface area of 50 to 1,000 square meters per gram, preferably 100 to 400 square meters per gram; and a pore volume of 0.5 to 3.5 ml per gram; preferably 0.5 to 2 ml per gram.

The inorganic oxide support used in the preparation of the catalyst may be any particulate oxide or mixed oxide such that it is substantially free of adsorbed moisture or surface hydroxyl groups. If a support is employed that contains surface hydroxyl groups, a drying or dehydration treatment must be employed. Timing for the dehydration of the support is not critical; i.e., dehydration may occur immediately before use of the support or days before provided once the support is dehydrated, it is protected from moisture and impurities. Thermal treatment to dehydrate the support may be carried out in vacuum or while purging with a dry inert gas such as nitrogen at a temperature of 100°C to 1000°C, and preferably, above 300°C to 800 or 900°C, or more preferably 500°C to 850°C. Pressure considerations are not critical. The duration of the thermal treatment can be from 1 to 24 hours.

Chemical dehydration or chemical treatment to dehydrate the support may be accomplished by slurring the inorganic particulate material, such as, for example, silica in an inert low boiling hydrocarbon, such as, for example, hexane. During the chemical dehydration reaction, the support, preferably silica, should be maintained in a moisture and oxygen-free atmosphere. To the silica slurry is then added a low boiling inert hydrocarbon solution of the chemical dehydrating agent. Useful chemical agents are for example, chlorosilanes, such as trimethylchlorosilane and alkyl metal compounds such as dibutylmagnesium, diethylzinc, trimethylaluminum, triethylaluminum, trimethylaluminum and triethylaluminum being particularly preferred. The ratio of millimoles of metal alkyl per gram of support may be between 0.1 to 100, a ratio of 1 to 10 being preferred. The chemical dehydration may be carried out at temperatures of -100°C to 300°C (preferably 0°C to 100°C) and contact times can range from 1 minute to 48 hours, preferably 15 minutes to 2 hours. The treated silica is filtered off and washed with a light aliphatic hydrocarbon (pentanes or hexanes) before drying in vacuo or in a dry stream of inert gas Since even small amounts of alkyl metal can have an adverse effect on catalyst reactivity to comonomers, the support is washed several times with an inert hydrocarbon solvent to remove both excess dehydration agent and its dehydration reaction products.

To achieve a more active catalyst system the dried support material is subsequently stirred in a hydrocarbon solution of a hydrolyzable organoadditive, preferably a Group 13 alkyl compound such as an alkyl aluminum, such as triethylaluminum (TEAL), preferably 3 mmol or less of 1M hexane solution per gram of support isolated, and washed with a hydrocarbon solvent, such as pentane, to remove unreacted alkyl aluminum. The catalyst system is placed on the support after the treatment with an alkyl aluminum solution.

Producing the supported ionic catalyst was surprising since it would have been expected that the reaction of the ionic catalyst with a Lewis base, as present on the oxide surface, would result in catalyst deactivation. The metal oxides generally contain surface hydroxyl groups which typically react with and deactivate the ionic transition metal catalyst. As such it was found that failure to employ a sufficiently dehydrated or dried oxide support would cause catalyst activity to be either greatly diminished or totally absent. Therefore, to achieve a catalytically active system, the inorganic oxide support must be substantially free of adsorbed hydroxyl groups on its surface.

The process described herein may also be applied to transition metal components with multiple Cp radicals to achieve the unexpected benefits found for the currently described compositions.

Generally, hydrogen is employed during polymerizations to control MW of a resulting polymer. Certain catalysts in a gas phase reactor have been found to produce hydrogen which must then be released from the reactor. Mono-Cp, ionically activated catalysts offer the potential to use hydrogen as a source of MW control. Mono-Cp ionically activated catalysts generally produce homo-or copolymers having a MW from 2x10⁵ to 2x10⁶ or greater, optionally having a density range of 0.88-0.97, preferably 0.885-0.960.

### Catalyst Preparation and Use

The supported ionic transition metal catalyst of this invention may be prepared by combining the transition metal component, the activator component and the support in suitable solvents in one or more steps.

### A. Catalyst Preparation

The supported catalyst of this invention can be prepared by combining the transition metal, activator components and support in one or more suitable solvents or diluent. Suitable solvents and/or diluents include, but are not necessarily limited to, straight and branched-chain hydrocarbons such as isobutane, butane, pentane, hexane, heptane, octane; cyclic and alicyclic hydrocarbons such as cyclohexane, cycloheptane, methylcyclohexane, methylcycloheptane; and aromatic and alkyl-substituted aromatic compounds such as benzene, toluene, xylene.

It is preferred that the catalyst components be handled in an inert, moisture-free, oxygen-free environment such as argon, nitrogen or helium because of the sensitivity of the catalyst components to moisture and oxygen.

In a preferred method, the transition metal and activator components are combined in a first step in an aromatic solvent to produce a reaction product solution. This reaction may be carried out in the temperature range-100° to 300°C, preferably 0° to 100°C. Holding times to allow for the completion of the reaction may range from 10 seconds to 60 minutes depending upon variables such as a reaction temperature and choice of reactants.

The solution produced by combining the transition metal and activator components is then contacted with the support which has been preferably dehydrated at 500° to 850°C, treated with a solution of an alkyl aluminum reagent and subsequently isolated from the wash containing the reagent and its reaction products. The method of contact may vary, but it is preferred that the transition metal/activator solution be added to a rapidly stirred slurry of the catalyst support in a hydrocarbon solvent, preferably an aliphatic solvent, such as pentane.

In a second preferred method, the activator component and support, which has been treated as above, are slurried in a suitable solvent, preferably an aromatic solvent. To this suspension is added a solution of transition metal in an aliphatic or aromatic solvent, preferably toluene. After holding the reaction for a sufficient period to allow completion of the reaction between the transition metal and activator components, the solvent is evaporated to give the supported catalyst as a free-flowing solid.

In a third preferred method, which leads to a more active catalyst, the activator component is dissolved in an aromatic solvent with the support, which has been treated as described above, to produce a supported activator component. This reaction is carried out at a temperature sufficient to produce a homogeneous solution of the activator component, preferably between 25°C to 200°C. The aromatic solvent is then removed to leave a free-flowing supported material. The supported material is subsequently contacted with the transition metal component, preferably in an aliphatic solvent to produce the supported catalyst.

Regardless of the method, the active supported catalyst can be recovered by removal of the solvent to obtain a free-flowing solid or alternatively, the active supported catalyst can be maintained in a slurry state for direct use.

Contact temperatures may range from 0° to 100°C depending upon the solvents used. Contact times may vary from 10 seconds to 60 minutes.

In the preparation of the supported catalyst, the reagents should be combined to provide a catalyst concentration (transition metal and activator) on the support of from 0.01 wt % to 20 wt %, preferably 1 wt % to 5 wt % based upon the weight of the support.

In an embodiment of the present invention, Me₂Si(Me₄C₅)(NC₁₂H₂₃)TiMe₂ (C₁₂H₂₃ is cyclododecyl) or Me₂Si(Me₄C₅)(N-t-Bu)ZrMe₂ is reacted with N,N-dimethylanilinium tetrakis(pentafluorophenyl)boron and then contacted with a previously treated alumina, silica or silica-aluminia support to produce the catalyst of the present invention. The transition metal and activator components are combined at a temperature within the range -100° to 300°C, preferably from 0°C to 100°C, and preferably in an aromatic hydrocarbon solvent, most preferably toluene. A nominal holding time within the range from 10 seconds to 60 minutes will be sufficient before the mixture is contacted with a slurry of the dried support material in an aliphatic solvent for a contacting period of from 10 seconds to 60 minutes.

In a second embodiment of the present invention, the silica, alumina, or silica-alumina support, thermally and/or chemically dehydrated as described above, is slurried with N,N-dimethylanilinium tetrakis(pentafluorophenyl)boron preferably in an aromatic hydrocarbon solvent, most preferably toluene. To this slurry is added a solution of the transition metal component in, preferably, toluene. After a contacting period of from 1 to 60 minutes, the solvent is evaporated away in vacuo to recover the supported catalyst.

In a third embodiment of the present invention, in a first step, N,N-dimethylanilinium tetrakis(pentafluorophenyl)boron is dissolved in an aromatic solvent maintained at a temperature sufficient to dissolve the activator component. The support, thermally and/or chemically dehydrated as above, is slurried therein and the activator and support are reacted for 1 minute to 1 hour to produce a supported activator component. The aromatic solvent is removed to leave a free-flowing support material containing the activator component. This supported activator component is then contacted with the transition metal component, preferably in an aliphatic solvent to produce the supported catalyst.

With any of these methods, the active supported catalyst can be recovered by removal of the solvent to obtain a free-flowing solid or, alternately, the active supported catalyst can be maintained in a slurry state for direct use.

A particularly surprising feature of the present invention is that the supported catalyst systems retain most of their catalytic activity over much longer periods of time than their unsupported variants.

The supported catalyst may optionally be prepolymerized with an olefinic monomer in order to achieve improved particle strength and size and reduced reactor fouling during polymerization.

### B. Catalyst Use

The supported ionic catalyst may be used for the homopolymerization of ethylene or the copolymerization of ethylene with olefins having 3 to 10 carbon atoms.

Gas or slurry polymerizations using the inventive supported catalysts may be conducted generally at a temperature in the range of 0° to 160°C or even higher, and under atmospheric, subatmospheric or superatmospheric pressure conditions.

A slurry polymerization process can utilize sub- or super-atmospheric pressures and temperatures in the range of -80° to 250°C. In a slurry polymerization, a suspension of solid, particulate polymer is formed in a liquid polymerization medium to which ethylene, α-olefin, diolefin, cyclic olefin or acetylenically unsaturated comonomer, hydrogen and catalyst are needed. Alkanes and cycloalkanes, such as butane, pentane, hexane, or cyclohexane, are preferred with C₄ to C₁₀ alkanes especially preferred. Preferred solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene, and 1-decene.

A gas-phase polymerization process utilizes superatmospheric pressure and temperatures in the range of 50° to 120°C. Gas-phase polymerization can be performed in a stirred or fluidized bed of catalyst and product particles in a pressure vessel adapted to permit the separation of product particles from unreacted gases. Thermostated ethylene, comonomer, hydrogen and an inert diluent gas such as nitrogen can be introduced or recirculated so as to maintain the particles at a temperature of 50° to 120°C. Polymer product can be withdrawn continuously or semi-continuously at a rate such as to maintain a constant product *inventory in the reactor*. After *polymerization and* deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants, and other additives, as is known in the art, may be added to the polymer.

In a preferred embodiment of the present invention, the transition metal component will be a substituted or unsubstitued mono-Cp metal heteratom containing compound with one or two lower alkyl substituents and/or one or two hydride substituents. The activator component will be a tri-substituted ammonium salt of a fluorinated tetraphenylboron anion or a triphenyl boron anion. Each of the tri-substitutions in the ammonium cation will be the same or a different lower alkyl or aryl radical. By lower alkyl it is meant an alkyl radical containing from 1 to 4 carbon atoms. N,N-dimethylanilinium tetrakis(pentafluorophenyl)borate is particularly preferred.

The catalysts of this invention, in the absence of a chain transfer agent, can lead to the production of extremely high molecular weight polymers, low melt index, and copolymers having relatively narrow molecular weight distributions. In this regard, it should be noted that homopolymers and copolymers having molecular weights from 2x10⁵ up to 2x10⁶ or higher and molecular weight distributions within the range of 1.5 to 3 can be produced. Employing these catalysts at lower polymerizing temperatures will usually produce polymers of higher molecular weight. However polymerization temperatures of 60°C or greater can produce polyethylene of MW greater than 2 x 10⁵. Example 1 illustrates use of catalyst to yield polymer having a molecular weight greater than 1 million. In addition, if lower or moderate molecular weights are desired, molecular weight can be controlled with the use of a chain transfer agent such as hydrogen.

Polymers formed employing the supported catalyst described herein, either alone or with an organometallic additive have been found to exhibit high strength useful in fibers; fibers which can be spun or gel bond. Generally, the higher molecular weight polymers produce the properties most desirable for fiber usage.

Combinations of two or more ionic transition metal catalyst with the support can be employed in order to obtain broader MWD such as up to 15 or greater. Alternatively, two or more separately supported catalysts can be used to obtain broad MWD polymers and copolymers.

Transition metal compound precursors providing tacticity control for the stereospecific polymerization of prochiral olefins, propylene, or higher alpha-olefins, exist when A' acts to restrict rotation of Cp ring and/or the Cp ring is of sufficient bulk to restrict rotation such that the appropriate symmetry conditions are satisfied.

Preferable prochiral transition metal compounds for the production of isotactic polymers are those where A' is a bridging group and the substituents on Cp are chosen such that 1) the steric difference between Cp and the heteroatom is maximized and 2) the absence of a plane of symmetry through the metal center and the carbon atoms on the Cp and heteroatom which are bonded to A'. For the production of syndiotactic polymers the second condition requires the presence of a plane of symmetry through the metal center and the carbon atoms on the Cp and heteroatom which are bonded to A'. The supported catalysts may be most usefully employed in gas or slurry phase processes, both of which are known to those of skill in the art.

US 5,153,157 discloses use of a organo additive to enhance production of an unsupported bis-Cp component ionic catalyst system during polymerization. It has been found that the use of an additive or scavenger with the supported ionic catalyst enhances productivity thereof.

The advantages of the instant invention will be more readily appreciated by reference to the following illustrative, non-limiting examples.

### Example 1 - Teal-Treated Silica - Polyethylene Polymerization

To 5.0 g of Davison 948 silica slurried in pentane, 15 ml of 1.5 M teal was added, and the slurry was stirred for 30 minutes. The silica was then washed eight times with pentane to remove any free aluminum alkyl and then dried in vacuo.

To 1.0 g of teal-treated silica slurried in toluene, 24 mg of N,N-dimethylanilinium tetrakis (pentafluorphenyl)boron ([DMAH][B(pfp)₄]) and 15 mg of Me₂Si(Me₄C₅)(NC₁₂H₂₃)TiMe₂ dissolved in 15 ml of toluene was added dropwise. After addition, the solvent was removed in vacuo and isolated.

400 ml of hexane, 1.0 g of the supported catalyst, and 13.78 bar (200 psi) of ethylene were added to the reactor at 60°C and allowed to react for 30 minutes. Polyethylene (20.0 g) was recovered. The molecular weight of this polyethylene could not be determined by GPC since the polymer was not soluble in orthodichlorobenzene at 170°C thus indicating a molecular weight greater than 1 to 2 million. The polymer density was measured at 0.934 g/ml DSC data gave a second melt at 137°C, a final melting point at 140°C, and a calculated crystallinity of 31%.

### Example 2 - Teal-Treated Silica, Polyethylene Polymerization

Silica (Davison 948, dried at 800°C, 100 g) was slurried in pentane (1 l). Triethylaluminum (200 ml of 1.5 M solution in heptane) was added over 30 minutes and the slurry stirred an additional 45 minutes. The solids were filtered off, washed 10 times with pentane and dried. A sample (5 g) was slurried in toluene (30 ml). A solution of N,N-dimethylanilinium tetrakis(pentafluorphenyl)boron (162 mg) in warm toluene (100 ml) was added slowly. The solvent was evaporated in vacuo.

A sample of the support thus treated (500 mg) was slurried in pentane and dimethylsilyl(tetramethylcyclopentadienyl)(t-butylamido)zirconium dimethyl (8 mg) in pentane solution added. The solvent was evaporated in vacuo to afford the supported catalyst.

The supported catalyst (420 mg) was transferred, under nitrogen, to a 1 liter stainless-stecl autoclave which had previously been flushed with nitrogen and which contained 400 ml of dry, deoxygenated hexane. The autoclave was pressured to 6.89 bar (100 psi) with ethylene and stirred at 60°C. After 10 minutes, the autoclave was cooled, vented, and the contents separated by filtration. The yield of polyethylene was 11.0 g.

Although the invention has been described with reference to its preferred embodiments, those of ordinary skill in the art, upon reading this disclosure, will appreciate changes and modifications which do not depart from the scope and spirit of the invention as described above or claimed hereafter.

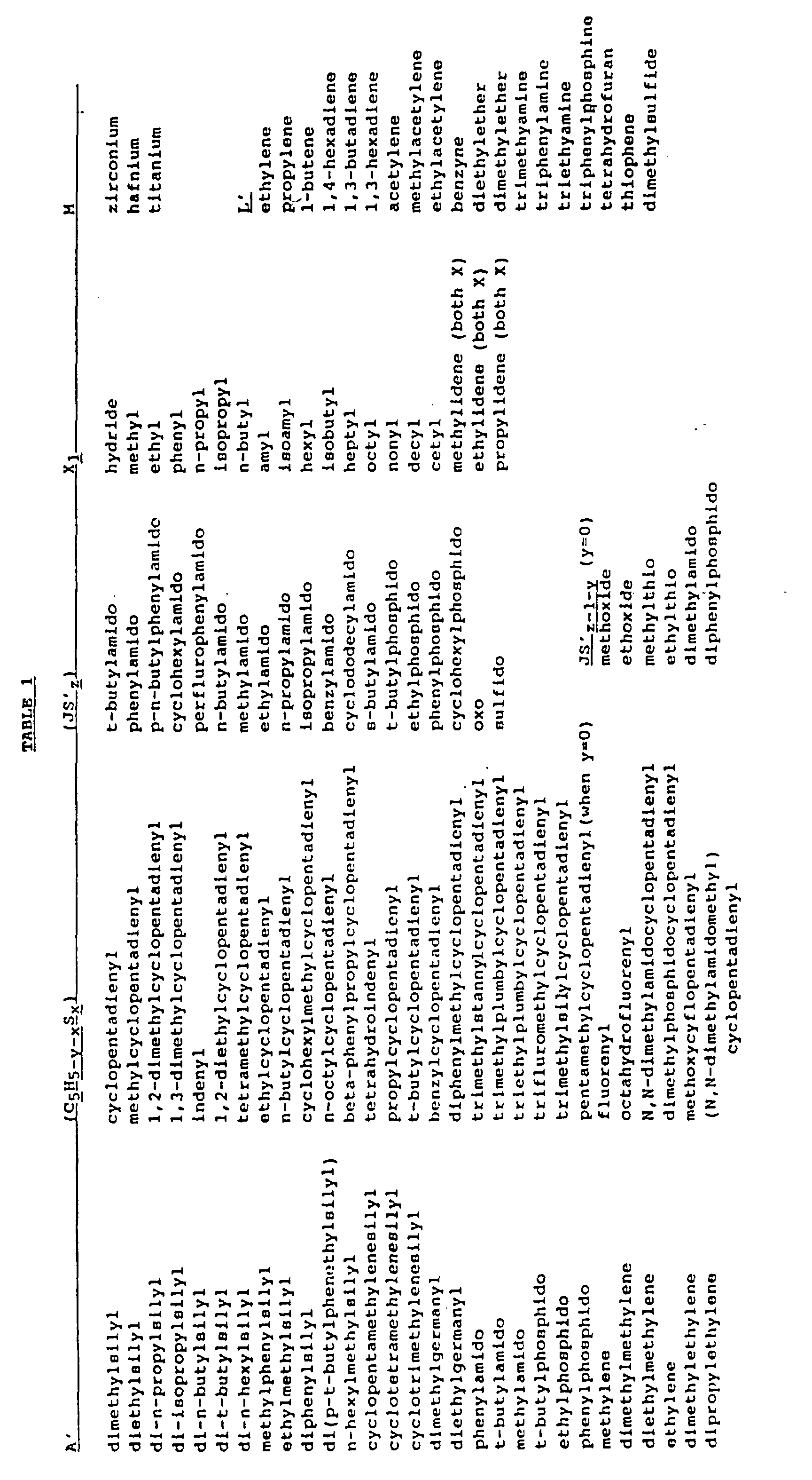

## Claims

1. A process to produce polyolefins comprising contacting ethylene or ethylene with olefins having from 3 to 10 carbon atoms under polymerization conditions in the presence of the catalyst obtained by a method comprising the steps of
(a) combining,
(i) at least one transition metal component and
(ii) an activator component, said at least one transition metal component comprising a monocyclopentadienyl metal compound including a metal selected from Group 4 transition metals, the activator component comprising a cation which will irreversibly react with at least one ligand in said transition metal component and an anion, said anion being a chemically stable non-nucleophilic anionic complex to provide an ionic catalyst of the general formulae 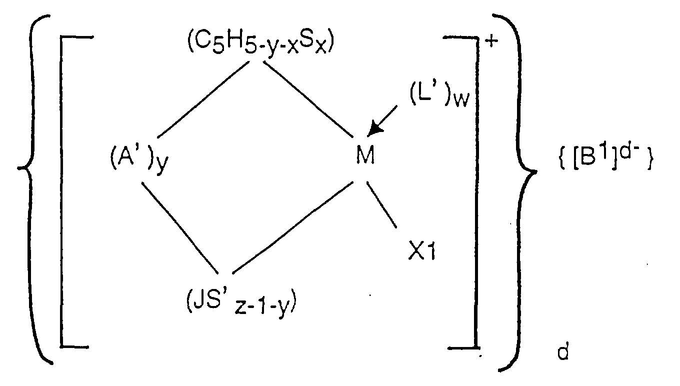 wherein:
A' is a bridging group;
(C₅H_{5-y-x}Sₓ) is a Cp ring substituted with from zero to five S radicals, each substitutent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C4 to C20 ring to give a saturated or unsaturated polycyclic Cp ligand;
x is from 0 to 5 denoting the degree of substitution;
M is Group 4 transition metal;
L' is a neutral Lewis base;
X₁ is a hydride radical, hydrocarbyl radical, substituted-hydrocarbyl radical, hydrocarbyl-substituted organometalloid radical or halocarbyl-substituted organometalloid radical, which radical may optionally be covalently bonded to both or either M and L' or all and any M, S, and S' and X₁ is not a Cp ring as defined above;
(JS'_{z-l-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; and z is the coordination number of the element J;
y is 0 or 1;
w is an integer from 0 to 1;
B' is the chemically stable, non-nucleophilic anionic complex having a molecular diameter about or greater than 4 angstroms; and
d is an integer representing the charge of B';
(iii) a catalyst support material selected from alumina, silica, alumina-silica, talc, magnesia, zirconia, titania, finely divided polyolefins or mixtures thereof, preferably alumina, silica, or mixtures thereof, which catalyst support has been previously dehydrated; and
(b) optionally prepolymerizing said supported catalyst system with an olefinic monomer.

2. The process of claim 1 wherein the support has been treated with a hydrocarbon solution of a hydrolyzable organoadditive.

3. The process of claim 2 wherein the support is treated at temperatures of 100°C to 300°C for 1 minute to 48 hours.

4. The process of claims 2 or 3 wherein the ratio of millimoles of hydrolyzable organoadditive per gram of support is 0.1 to 100.

5. The process of claim 4 wherein the support is dehydrated at 100°C to 1000°C for 1 to 24 hours.

6. The process of claim 2, 3 or 4 wherein after treatment with the hydrocarbon solution the support is isolated.

7. The process of any preceding claim wherein the supported catalyst is formed as a free flowing solid.

8. The process of claim 1 wherein (C₅H_{5-y-x}Sₓ) is tetramethylcyclopentadienyl, A' is dimethylsilyl, y is 1, (JS'_{z-1-y}) is t-butylamido, M is zirconium, X1 is methyl, L' is N,N-dimethylaniline, and B' is tetrakis(pentafluorophenyl)-borate.

9. The process of claim 8 wherein (JS'_{z-1-y}) is C₁₂H₂₃, M is titanium.

10. The process of claim 1, wherein the at least one transition metal component and the at least one activator component are first reacted in a solvent or diluent and the direct product or the decomposition product of said direct product is contacted in a suitable solvent with the catalyst support material and optionally prepolymerizing with an olcfinic monomer.

11. The process of claim 1, wherein the activator component is dissolved in an aromatic solvent and the support is slurried therein and allowed to react, the supported activator component is then contacted with the transition metal component in an uliphatic or aromatic solvent and optionally prepolymerizing with an olefinic monomer.

12. The method of claim 1 wherein B' is represented by the general formula:
[(L'-H)+]^{c}[(M')^{m+}Q₁Q₂...Qₙ]^{d-}
wherein:
H is a hydrogen atom;
[L'-H] is a Bronsted acid;
M' is a metal or metalloid;
Q₁ to Qₙ are, independently, hydride radicals, bridged or unbridged dialkylamido radicals, alkoxide and aryloxide radicals, substituted-hydrocarbyl radicals, balocarbyl and substituted-halocarbyl radicals and hydrocarbyl- and halocarbyl-substituted organometalloid radicals and any one, but not more than one, Q₁ to Qₙ may be a halide radical;
m is an integer representing the formal valence charge of M'; and
n is the total number of Q ligands.

13. The process according to any of claims 1 to 12 wherein a hydrolyzable organoadditive is employed in preparing the catalyst.

14. The process according to claim 13 wherein the polymerization conditions comprise temperatures from -80°C to 250°C and pressures from 0.00689 to 241.15 bar (0.1 atm, to 3500 atm).

15. The process according to claims 12, 13, or 14 wherein at least 2 transition metal components are employed during polymerization.

16. The process of claim 15 wherein an organoadditive is introduced during polymerization.

17. The process of any of claims 12 to 16 wherein hydrogen is employed during polymerization.

18. The process of claims 12 to 16 wherein the polyolefin product formed has a weight average molecular weight of 2 x 10⁵ or greater.

19. The process of claim 18 wherein the polyolefin formed has a density in the range of 0.88 to 0.97 g/ml.

20. The process of any of claim 12 to 16 wherein the polyolefin formed is made into a fiber.

## Patentansprüche

1. Verfahren zum Herstellen von Polyolefinen, bei dem Ethylen oder Ethylen mit Olefinen mit 3 bis 10 Kohlenstoffatomen unter Polymerisationsbedingungen in Gegenwart des Katalysators kontaktiert wird, der durch ein Verfahren erhalten wird, bei dem in Stufen
(a)
(i) mindestens eine Übergangsmetallkomponente und
(ii) Aktivatorkomponente, wobei die mindestens eine Übergangsmetallkomponente eine Monocyclopentadienylmetallverbindung umfasst, die ein Metall ausgewählt aus Gruppe 4 Übergangsmetallen einschließt, wobei die Aktivatorkomponente ein Kation, das mit mindestens einem Liganden in der Übergangsmetallkomponente irreversibel reagiert, und ein Anion umfasst, wobei das Anion ein chemisch stabiler, nichtnukleophiler, anionischer Komplex ist, so dass sich ein ionischer Katalysator mit den allgemeinen Formeln: 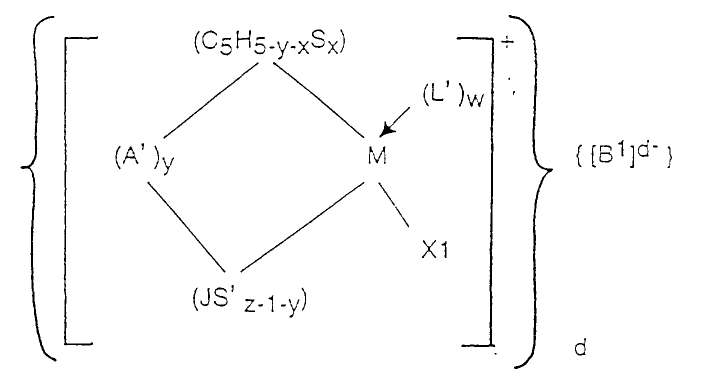 ergibt, worin:
A' eine verbrückende Gruppe ist,
(C₅H_{5-y-x}Sₓ) ein Cp-Ring ist, der mit 0 bis 5 S-Resten substituiert ist, wobei jede Substituentengruppe S unabhängig eine Restgruppe ist, die Kohlenwasserstoff, substituierter Kohlenwasserstoff, Halogenkohlenstoff, substituierter Halogenkohlenstoff, kohlenwasserstoffsubstituiertes Organometalloid, halogenkohlenstoffsubstituiertes Organometalloid, kohlenwasserstoffsubstituiertes Bor, kohlenwasserstoffsubstituiertes Pnictogen, kohlenwasserstoffsubstituiertes Chalcogen oder Halogen ist oder zwei benachbarte S-Gruppen verbunden sind und einen C₄- bis C₂₀-Ring bilden, so dass sich ein gesättigter oder ungesättigter polycyclischer Cp-Ligand ergibt,
x von 0 bis 5 ist und den Substitutionsgrad angibt,
M Gruppe 4 Übergangsmetall ist,
L' eine neutrale Lewis-Base ist,
X₁ ein Hydridrest, Kohlenwasserstoffrest, substituierter Kohlenwasserstoffrest, kohlenwasserstoffsubstituierter Organometalloidrest oder halogenkohlenstoff substituierter Organometalloidrest ist, welcher Rest gegebenenfalls an M und/oder L' oder alle oder beliebige von M, S und S' kovalent gebunden sein kann, und X₁ nicht ein Cp-Ring wie oben definiert ist,
(JS'_{z-1-y}) ein Heteroatomligand ist, in dem J ein Element aus Gruppe 15 des Periodensystems der Elemente mit einer Koordinationszahl von 3 oder ein Element aus Gruppe 16 mit einer Koordinationszahl von 2 ist, S' eine Restgruppe ist, die ein Kohlenwasserstoff, substituierter Kohlenwasserstoff, Halogenkohlenstoff, substituierter Halogenkohlenstoff, kohlenwasserstoffsubstituiertes Organometalloid oder halogenkohlenstoffsubstituiertes Organometalloid ist und z die Koordinationszahl des Elements J ist,
y 0 oder 1 ist,
w eine Zahl von 0 bis 1 ist,
B' der chemisch stabile, nichtnukleophile, anionische Komplex ist, der einen Molekulardurchmesser von etwa 4 Å oder größer aufweist, und
d eine Zahl ist, die Ladung von B' wiedergibt,
(iii) Katalysatorträgermaterial ausgewählt aus Aluminiumoxid, Siliciumdioxid, Aluminiumoxid-Siliciumdioxid, Talk, Magnesiumoxid, Zirkoniumdioxid, Titandioxid, feinteiligen Polyolefinen oder Mischungen derselben, vorzugsweise Aluminiumoxid, Siliciumdioxid oder Mischungen derselben, wobei der Katalysatorträger zuvor dehydratisiert worden ist, kombiniert werden und
(b) gegebenenfalls das Trägerkatalysatorsystem mit Olefinmonomer präpolymerisiert wird.

2. Verfahren nach Anspruch 1, bei dem der Träger mit einer Kohlenwasserstofflösung von hydrolysierbarem organischen Additiv behandelt worden ist.

3. Verfahren nach Anspruch 2, bei dem der Träger bei Temperaturen von 100 °C bis 300 °C für 1 Minute bis 48 Stunden behandelt wird.

4. Verfahren nach den Ansprüchen 2 oder 3, bei dem das Verhältnis der Millimole von hydrolysierbarem organischen Additiv pro Gramm Träger 0,1 bis 100 beträgt.

5. Verfahren nach Anspruch 4, bei dem der Träger bei 100 °C bis 1000 °C für 1 bis 24 Stunden dehydratisiert wird.

6. Verfahren nach den Ansprüchen 2, 3 oder 4, bei dem der Träger nach Behandlung mit der Kohlenwasserstofflösung isoliert wird.

7. Verfahren nach einem der vorhergehenden Ansprüche, bei dem der Trägerkatalysator als freifließender Feststoff gebildet wird.

8. Verfahren nach Anspruch 1, bei dem (C₅H_{5-y-x}Sₓ) Tetramethylcyclopentadienyl ist, A' Dimethylsilyl ist, y 1 ist, (JS'_{z-l-y}) tert.-Butylamido ist, M Zirkonium ist, X₁ Methyl ist, L' N,N-Dimethylanilin ist und B' Tetrakis(pentafluorphenyl)-borat ist.

9. Verfahren nach Anspruch 8, bei dem (JS'_{z-1-y}) C₁₂H₂₃ ist, M Titan ist.

10. Verfahren nach Anspruch 1, bei dem die mindestens eine Übergangsmetallkomponente und die mindestens eine Aktivatorkomponente zunächst in Lösungsmittel oder Verdünnungsmittel umgesetzt werden und das direkte Produkt oder das Zersetzungsprodukt des direkten Produkts in geeignetem Lösungsmittel mit dem Katalysatorträgermaterial kontaktiert wird und gegebenenfalls mit Olefinmonomer präpolymerisiert wird.

11. Verfahren nach Anspruch 1, bei dem die Aktivatorkomponente in einem aromatischen Lösungsmittel gelöst wird und der Träger darin aufgeschlämmt wird und reagieren gelassen wird, die Aktivatorträgerkomponente dann mit der Übergangsmetallkomponente in einem aliphatischen oder aromatischen Lösungsmittel kontaktiert wird und gegebenenfalls mit Olefinmonomer präpolymerisiert wird.

12. Verfahren nach Anspruch 1, bei dem B' durch die allgemeine Formel:
[(L'-H)+]^{c}[(M')^{m+}Q₁Q_{2...}Qₙ]^{d-}
wiedergegeben wird, in der:
H ein Wasserstoffatom ist,
[L'-H] eine Brönsted-Säure ist,
M' Metall oder Metalloid ist,
Q₁ bis Qₙ unabhängig Hydridreste, verbrückte oder unverbrückte Dialkylamidoreste, Alkoxid- und Aryloxidreste, substituierte Kohlenwasserstoffreste, Halogenkohlenstoffreste und substituierte Halogenkohlenstoffreste und kohlenwasserstoff- und halogenkohlenstoffsubstituierte Organometalloidreste sind und ein beliebiger, aber nicht mehr als einer von Q₁ bis Qₙ ein Halogenidrest sein kann,
m eine Zahl ist, die die formale Valenzladung von M' wiedergibt, und
n die Gesamtzahl an Q-Liganden ist.

13. Verfahren nach einem der Ansprüche 1 bis 12, bei dem bei der Herstellung des Katalysators hydrolysierbares organisches Additiv verwendet wird.

14. Verfahren nach Anspruch 13, bei dem die Polymerisationsbedingungen Temperaturen von -80 °C bis 250 °C und Drücke von 0,00689 bis 241,15 bar (0,1 atm bis 3500 atm) umfassen.

15. Verfahren nach den Ansprüchen 12, 13 oder 14, bei dem mindestens zwei Übergangsmetallkomponenten während der Polymerisation verwendet werden.

16. Verfahren nach Anspruch 15, bei dem während der Polymerisation organisches Additiv eingebracht wird.

17. Verfahren nach einem der Ansprüche 12 bis 16, bei dem während der Polymerisation Wasserstoff verwendet wird.

18. Verfahren nach den Ansprüchen 12 bis 16, bei dem das gebildete Polyolefinprodukt ein durchschnittliches Molekulargewicht (Gewichtsmittel) von 2 × 10⁵ oder größer aufweist.

19. Verfahren nach Anspruch 18, bei dem das gebildete Polyolefin eine Dichte im Bereich von 0,88 bis 0,97 aufweist.

20. Verfahren nach einem der Ansprüche 12 bis 16, bei dem das gebildete Polyolefin zu einer Faser gemacht wird.

## Revendications

1. Procédé pour la production de polyoléfines, comprenant la mise en contact d'éthylène ou bien d'éthylène avec des oléfines ayant 3 à 10 atomes de carbone dans des conditions de polymérisation en présence du catalyseur obtenu par un procédé comprenant les étapes consistant
(a) à associer
(i) au moins un composé de métal de transition, et
(ii) un constituant activateur, ledit au moins un composé de métal de transition comprenant un composé métallique monocyclopentadiénylique comprenant un métal choisi parmi les métaux de transition du Groupe 4, le constituant activateur comprenant un cation qui réagira de manière irréversible avec au moins un ligand dans ledit composé de métal de transition et un anion, ledit anion étant un complexe anionique non-nucléophile chimiquement stable, pour produire un catalyseur ionique de formule générale : 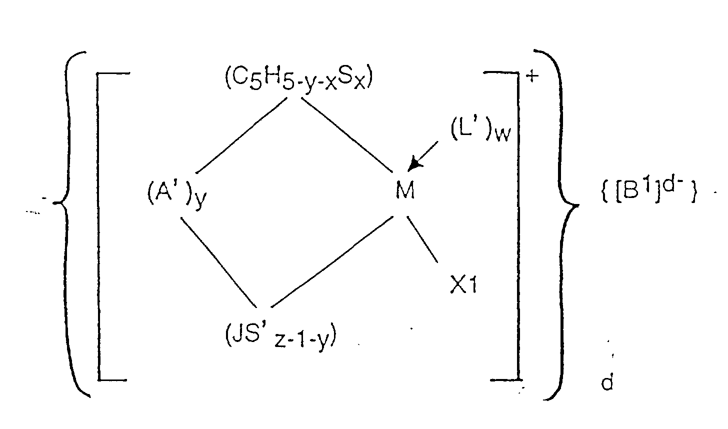 dans laquelle :
A' représente un groupe de pontage ;
(C₅H_{5-y-x}Sₓ) représente un noyau Cp substitué avec zéro à cinq radicaux S, chaque groupe S servant de substituant représentant, indépendamment, un radical qui est un radical hydrocarbyle, hydrocarbyle substitué, halogénocarbyle, halogénocarbyle substitué, organométalloïdique à substituant hydrocarbyle, organométalloïdique à substituant halogénocarbyle, bore à substituant hydrocarbyle, pnictogène à substituant hydrocarbyle, chalogène ou halogène à substituant hydrocarbyle, ou bien deux groupes S adjacents sont joints en formant un noyau en C₄ à C₂₀ donnant un ligand Cp polycyclique, saturé ou insaturé;
x a une valeur de 0 à 5 et désigne le degré de substitution ;
M représente un métal de transition du Groupe 4 ;
L' représente une base de Lewis neutre ;
X₁ représente un radical hydrure, un radical hydrocarbyle, un radical hydrocarbyle substitué, un radical organométalloïdique à substituant hydrocarbyle ou un radical organométalloïdique à substituant halogénocarbyle, radical qui peut être facultativement lié par covalence à l'un des ou les deux M et L' ou bien à la totalité et n'importe lesquels de M, S et S' et X₁ ne représente pas un noyau Cp répondant à la définition précitée ;
(JS'_{z-1-y}) représente un ligand hétéroatomique dans lequel J est un élément du Groupe 15 du Tableau Périodique des Eléments ayant un indice de coordination égal à 3 ou un élément du Groupe 16 ayant un indice de coordination égal à 2 ; S' représente un groupe consistant en un radical hydrocarbyle, hydrocarbyle substitué, halo-génocarbyle, halogénocarbyle substitué, organométalloïdique à substituant hydrocarbyle ou organométalloïdique à substituant halogénocarbyle ; et z représente l'indice de coordination de l'élément J ;
y est égal à 0 ou 1 ;
w représente le nombre entier 0 ou 1 ;
B' représente le complexe anionique non nucléophile chimiquement stable ayant un diamètre moléculaire égal ou supérieur à environ 4 angströms ; et
d est un nombre entier représentant la charge de B' ;
(iii) une matière de support de catalyseur choisie entre l'alumine, la silice, l'alumine-silice, le talc, la magnésie, la zircone, l'oxyde de titane, des polyoléfines finement divisées ou leurs mélanges, de préférence l'alumine, la silice ou leurs mélanges, support de catalyseur qui a été préalablement déshydraté ; et
(b) facultativement, à prépolymériser ledit système de catalyseur fixé sur un support avec un monomère oléfinique.

2. Procédé suivant la revendication 1, dans lequel le support a été traité avec une solution d'un additif organique hydrolysable dans un hydrocarbure.

3. Procédé suivant la revendication 2, dans lequel le support est traité à des températures comprises dans l'intervalle de 100°C à 300°C pendant un temps de 1 minute à 48 heures.

4. Procédé suivant la revendication 2 ou 3, dans lequel le rapport du nombre de millimoles de l'additif organique hydrolysable par gramme de support est un rapport de 0,1 à 100.

5. Procédé suivant la revendication 4, dans lequel le support est déshydraté à une température comprise dans l'intervalle de 100°C à 1000°C pendant un temps de 1 à 24 heures.

6. Procédé suivant la revendication 2, 3 ou 4, dans lequel, après traitement avec la solution dans un hydrocarbure, le support est isolé.

7. Procédé suivant l'une quelconque des revendications précédentes, dans lequel le catalyseur fixé sur un support est produit sous forme d'une substance solide à écoulement libre.

8. Procédé suivant la revendication 1, dans lequel (C₅H_{5-y-x}Sₓ) représente un radical tétraméthylcyclopentadiényle, A' représente un radical diméthylsilyle, y est égal à 1, (JS'_{z-1-y}) représente un radical tertiobutylamido, M représente le zirconium, X1 représente un groupe méthyle, L' représente la N,N-diméthylaniline et B' représente le borate de tétrakis(pentafluorophényle).

9. Procédé suivant la revendication 8, dans lequel (JS'_{z-1-y}) représente un groupe C₁₂H₂₃ et M représente le titane.

10. Procédé suivant la revendication 1, dans lequel ledit au moins un composé de métal de transition et le dit au moins un constituant activateur sont tout d'abord amenés à réagir dans un solvant ou diluant et le produit direct ou le produit de décomposition dudit produit direct est mis en contact dans un solvant convenable avec la matière de support de catalyseur, avec facultativement une prépolymérisation avec un monomère oléfinique.

11. Procédé suivant la revendication 1, dans lequel le constituant activateur est dissous dans un solvant aromatique et le support est mis en suspension dans cette solution et laissé en réaction, le constituant activateur fixé sur un support est ensuite mis en contact avec le composé de métal de transition dans un solvant aliphatique ou aromatique, avec facultativement une prépolymérisation avec un monomère oléfinique.

12. Procédé suivant la revendication 1, dans lequel B' est représenté par la formule générale :
[(L'-H)+]^{c}[(M')^{m+}Q₁Q₂...Qₙ]^{d-}
dans laquelle
H représente un atome d'hydrogène ;
[L'-H] représente un acide de Brönsted ;
M' représente un métal ou métalloïde ;
Q₁ à Qₙ représentent, indépendamment, des radicaux hydrure, des radicaux dialkylamido pontés ou non pontés, des radicaux alcoolates et aryloxyde, des radicaux hydrocarbyle substitués, des radicaux halogénocarbyle et halogénocarbyle substitués et des radicaux organométalloïdiques à substituants hydrocarbyle et halogénocarbyle, et l'un quelconque, mais pas plus d'un, des radicaux Q₁ à Qₙ peut représenter un radical halogénure ;
m est un nombre entier représentant la charge de valence formelle de M' ; et
n est le nombre total de ligands Q.

13. Procédé suivant l'une quelconque des revendications 1 à 12, dans lequel un additif organique hydrolysable est utilisé dans la préparation du catalyseur.

14. Procédé suivant la revendication 13, dans lequel les conditions de polymérisation comprennent des températures comprises dans l'intervalle de -80°C à 250°C et des pressions comprises dans l'intervalle de 0,00689 à 241,15 bars (0,1 atmosphère à 3500 atmosphères).

15. Procédé suivant la revendication 12, 13 ou 14, dans lequel au moins 2 composés de métaux de transition sont utilisés au cours de la polymérisation.

16. Procédé suivant la revendication 15, dans lequel un additif organique est introduit au cours de la polymérisation.

17. Procédé suivant l'une quelconque des revendications 12 à 16, dans lequel de l'hydrogène est utilisé au cours de la polymérisation.

18. Procédé suivant les revendications 12 à 16, dans lequel le produit polyoléfinique formé a une moyenne en poids du poids moléculaire égale ou supérieure à 2 x 10⁵.

19. Procédé suivant la revendication 18, dans lequel la polyoléfine formée a une densité comprise dans l'intervalle de 0,88 à 0,97.

20. Procédé suivant l'une quelconque des revendications 12 à 16, dans lequel la polyoléfine formée est mise sous forme d'une fibre.
